# EUROPEAN PATENT SPECIFICATION

(11) **EP 1 956 776 B1**
(45) Date of publication and mention of the grant of the patent: **29.08.2012**
(21) Application number: 07120418.4
(22) Date of filing: 09.11.2007
(51) Int. Cl.: H04L 12/58

(54) **Method and system for transmitting an electronic message**
Verfahren und System zur Sendung einer elektronischen Postnachricht
Procédé et système pour la transmission d'un message électronique

(30) Priority: 08.02.2007 NL 1033356
(43) Date of publication of application: 13.08.2008
(73) Proprietor: DLB Finance & Consultancy B.V., 4874 LV Etten-Leur (NL); HITD Information Technology B.V., 3181 NZ Rozenburg (NL)
(72) Inventor: Benschop, Dirk Leonard, 4874 LV Etten-Leur (NL); Benschop, Henderik Reinout, 3181 NM Rozenburg (NL)
(74) Representative: van Looijengoed, Ferry Antoin Theodorus

(56) References cited:
- EP-A2- 1 496 655
- WO-A-00/42748
- WO-A-03/003234
- WO-A-03/061213
- WO-A1-2004/071035
- US-A1- 2002 174 194

## Description

### FIELD OF THE INVENTION

The invention relates to a method and system for transmitting an electronic message in a communication system. More specifically, the invention relates to a method and system for transmitting an electronic message from a first user device to a second user device, the system comprising at least a first server and a second server communicatively connected to each other and to the first and second user device.

### BACKGROUND

E-mail spam may generally be defined as unsolicited and/or undesired e-mail messages received by an e-mail recipient.

The amount of e-mail spam messages has dramatically increased over the last decade. The reason for that may be found in the huge number of addressees that can be reached with an e-mail at negligible costs. This combination of factors together with the obligatory delivery of e-mail has made e-mail or, more generally, electronic messaging an attractive communication medium for advertisement of a variety of products and services. Collections of e-mail addresses of people all over the world can be bought from numerous parties at very low cost. E-mail spam messages now account for more than 90% of all e-mail messages transmitted over the internet. As a consequence, electronic resources are wasted to a serious extent.

The increase of the amount of e-mail spam messages has triggered others to provide e-mail spam filters. These filters can be installed both on the side of the server and on the side of the client devices to detect and delete e-mail spam messages without troubling the user. Typically, these filters analyse e-mail messages and match the analysis results against e-mail spam rules in order to recognize e-mail spam. These e-mail spam rules are designed on the basis of known typical characteristics of e-mail spam messages, such as the number of addressees in the e-mail header or the occurrence of certain words in the e-mail body.

However, new forms of spam will not always be recognized and intercepted by these filters, since the e-mail spam rules are not able to recognize these new forms of spam since these spam rules for the new form of e-mail spam message could not yet have been implemented in the spam filter. As a consequence, a continuous race exists between e-mail spammers and spam filter providers, the latter by definition lagging behind the former. On the other hand, solicited and desired e-mail messages are sometimes filtered from the e-mail box of a recipient, because the e-mail message is qualified as spam as dictated by the e-mail spam rule set of the spam filter.

WO 03/061213 discloses a method for electronic mail notice and download. A sender mailbox at a source downemail server is introduced and the place at which an original message is stored until an intended recipient reads it is moved from the recipient mailbox at a destination downemail server to the sender mailbox. To relay a message from the email system to the downemail system, a message interworking server is also designed. The source downemail server generates a signaling message to notify the sending of a message and then transmits it to an intended recipient. After reading the signaling message, the recipient can get the original message from the sender mailbox.

US 2002/0174194 relates to a system providing a single web based interface that gives the user access to a plurality of different message accounts on different message servers. In addition, logon times and network bandwidth requirements are reduced by storing retrieved message information in a cookie on the user's terminal.

WO 00/42748 discloses an electronic document delivery system that enables exchange of digitally signed and public key encrypted packages without requiring pre-installed specialized public key security software applications on a recipient's computer. A URL identifying such a package is sent to the recipient by e-mail. Upon submission of the URL through the World Wide Web, computer instructions in the form of an applet, for example, are sent to the recipient to effect retrieval and processing of the package. Such processing can include decrypting one or more parts of the package and verification of a signature of the package.

WO 03/003234 discloses a system, method and computer program product for providing unified messaging using separate storage of media components allowing more efficient storage and retrieval of messages. A message is sent from a second user to a first user over a network. The message is received by a first server. The first server stores the media component of the message on a mass storage device. The first server also stores on an email server a header, including information about the message, and a reference to the corresponding media component of the message stored on the mass storage device. Upon retrieval of a stored message by the first user, the email server is queried via the first server. Subsequently, the email server provides to the first user, via the first server: the header, or non-media component of the message, and the reference to the corresponding media component of the message stored on the mass storage device. The reference can then used by the first user to retrieve from the mass storage device the corresponding media component of the message. Subsequently, the first user can view the entire message.

WO 2004/071035 discloses dynamic server-based filtering that selectively deletes or delivers messages based upon characteristics of the received messages and the filtering rules implemented on the server.

EP-A-1 496 655 discloses a system for detecting and preventing spam. The system provides several techniques for monitoring outgoing communications to identify potential spammers, such as identification and scoring. Further action can be taken to verify whether the potential spammer is a spammer. Such actions include human-inspecting a sample of the messages, sending challenges to the account, sending a legal notice to warn potential spammers and/or shutting down the account.

Furthermore, if e-mail spam filters are installed, the filters analyze each individual e-mail message in order to detect e-mail spam messages. As a consequence, message transfer is delayed and resources are wasted.

In view of the foregoing, there is an apparent need in the art for a method and system for transmitting electronic messages wasting less resources.

### SUMMARY OF THE INVENTION

It is an object of the invention to provide an improved method and system for transmitting electronic messages over a communication network.

To that end, a system is disclosed as defined in claim 1.

Furthermore, a method for transmitting an electronic message is disclosed in claim 12.

The invention is also directed to a computer program as claimed in claim 21 and a carrier containing such a computer program, wherein the computer program contains software code portions capable of, when installed in and executed by an electronic device, performing the method described in the previous paragraph.

The applicant has realized that the conventional method and system for transmitting electronic messages using mail servers results in a considerable waste of (electronic) resources. Mail servers typically duplicate a received electronic message for each addressee of the electronic message and fill the mailboxes of each of the addressees of the electronic message with copies of the electronic messages. Given that electronic spam messages are typically directed to large numbers of addressees and such spam messages account for a very large part of electronic message traffic, the waste of resources can easily be understood. Resources are wasted in various ways, e.g. requiring larger transmission capacity of network connections and heavy processing by servers for mail duplication. Moreover, spam filters are installed, that need to be updated regularly. Spam filters delay transmission of the electronic message as a result of the filtering process. The 'mailbox' of the addressees of the electronic message is built up dynamically from the first server(s) upon a request from the second user device. Addressees can inform the system of possible electronic spam. The perception of human beings of an electronic message is the best guarantee of spam recognition. The spam notification signal received by the system may initiate operations by the system on the electronic message (and possible other previous or future electronic messages), the sender of the electronic message and/or addressee(s) of the electronic message. The spam notification signal may be regarded as an order to the server system. Reference is made to a co-pending international patent application of the applicant ("Method and system for reducing the proliferation of electronic messages") filed on the same date as the present application.

A (first) reader of the electronic message may qualify an electronic message as spam and, by sending the spam notification signal, restrict access to the electronic message for further addressees. Consequently, (electronic) resources are saved. The applicant proposes to (solely) use a spam notification signal from users to detect electronic spam messages and, upon receipt of such a spam notification signal, to restrict access to the corresponding electronic message for other (users of) user devices. The server system thus allows that addressees of an electronic message themselves determine what electronic messages are spam messages and that the addressees are subsequently able to determine the access (rights) of other addressees to that message. As an example, the other (users of) user devices may not display or download the electronic message. Spam filters using spam recognition rule sets, spam parameters and criteria may be absent in the server system, at least for those electronic messages for which a spam notification signal has been received.

By providing addressees with only a (small) portion of the electronic message instead of the complete electronic message, considerable savings of resources can be obtained. The portion may e.g. be less than 200 bytes or even less than 100 bytes. The bandwidth requirements for the transmission of only such small portions of the electronic message are, therefore, lower and, moreover, mail duplication is not required. Also, filtering of electronic spam messages is not required for these portions. If the addressee has an interest in obtaining the complete electronic message, he may select the portion of the electronic message for retrieving the complete electronic message. The portion contains a retrieval key for the complete electronic message at the first server.

The embodiments of claims 2, 3, 13 and 14 define that message duplication is limited or even excluded, resulting in an improved use of the (electronic) resources.

The first and second server may be integrated, either physically or conceptually. A single server system connected to multiple addressees of an electronic message, may provide the addressees with only a portion of the electronic message before providing the option of retrieving the complete electronic message.

The embodiments of claims 5 and 16 define that the portion(s) of the electronic message are also deleted, e.g. after having received the spam notification signal. These embodiments may e.g. be applied for restricting access for the user of the second user device to approach the corresponding e-mail.

The embodiment of claim 6 provides the advantage of establishing a subscriber-only system for electronic message distribution. Since the subscribers are known, e-mail spammers and other abusers of the system can be identified and excluded from participation. Moreover, this embodiment allows identification of users of the server system.

The embodiment of claim 7 prevents the possibility of sniffing the identity of participants to the system and to transmit e-mail messages under a false identity. Secure communication may be realized by one or more known techniques, such as encrypting data or providing secure network connections.

The embodiments of claims 8 and 17 provide the advantage of enabling users to restrict access to other previous and/or future electronic messages from the same source on the basis of a sender identification of an electronic message for which a spam notification signal was received. Provisions can be made to mitigate the severity of such a measure for the sender on the basis of various parameters, such as the number of offenses of the sender. In particular, the applicant proposes to restrict access to other electronic messages for addressees of the electronic message for which the at least one spam notification signal was received in dependence of a communication history between said sender and said one or more addressees from which a spam notification signal was received. As an example, access restriction to other electronic messages may be performed immediately if the sender is unknown to the recipient (e.g. if the sender and recipient have not exchanged electronic messages previously). However, if the sender and recipient know each other, access to other electronic messages is not restricted at once (but possibly only after spam notification signals have been received for different electronic messages).

The embodiments of claims 9 and 18 provide the possibility of the system sending a warning signal to the sender of the electronic message for which a spam notification signal was received. This allows for providing the sender with information concerning the consequences of further offenses. The consequence of restricting access to the system can be obtained by the embodiments of claims 10 and 19. The consequence of no longer giving access to the system may be mitigated. In particular, the applicant proposes to restrict access to the system for senders of the electronic message for which the at least one spam notification signal was received in dependence of a communication history between said sender and one or more addressees from which the spam notification signal was received. As an example, access restriction to the system may be performed immediately if the sender is unknown to a recipient (e.g. if the sender and recipient have not exchanged electronic messages previously) and the sender issues a spam notification signal. However, if the sender and recipient know each other, access to the system is not restricted immediately in response to a spam notification signal issued from the user device of a known recipient (but possibly only after spam notification signals have been received for different electronic messages). Reference is made to a co-pending international patent application of the applicant ("Method and system for restricting access to an electronic message system") filed on the same date as the present application, the contents of the international application being incorporated in the present application by reference in its entirety.

Of course, the system may employ spam filters in addition to the functionality described in the present application for reducing the proliferation of electronic message. However, the operation of the server system as defined above operates independently from the operation of these possible spam filters

The embodiments of claims 11 and 20 define the application of programmable database(s). Programmable databases allow for the programming of predetermined responses in dependence on the type of request received. As an example, for spam notification, the users are allowed to perform an operation (requests) on a database, wherein the response of the database is e.g. the restriction of access for other addressees of the electronic message, the restriction of access to other electronic messages of the same source and/or the exclusion of the sender from the system. Moreover, a programmable database allows for monitoring relations between several parameters.

Hereinafter, embodiments of the invention will be described in further detail. It should be appreciated, however, that these embodiments may not be construed as limiting the scope of protection for the present invention.

### BRIEF DESCRIPTION OF THE DRAWINGS

In the drawings:
FIG. 1 is a schematic illustration of a system according to an embodiment of the invention;
FIG. 2 is a schematic illustration of a system according to an embodiment of the invention;
FIGS. 3A and 3B show a schematic example of a server of the system according to FIGS. 1 and 2;
FIG. 4 is a timing diagram illustrating a method according to an embodiment of the invention;
FIG. 5 is a schematic illustration of a system according an embodiment of the invention;
FIG. 6 shows a flow chart depicting steps of a method for reducing the proliferation of electronic messages for the communication system of FIG. 5, and
FIG. 7 shows an exemplary model for a database of a server of a server system according to an embodiment of the invention.

### DETAILED DESCRIPTION OF THE DRAWINGS

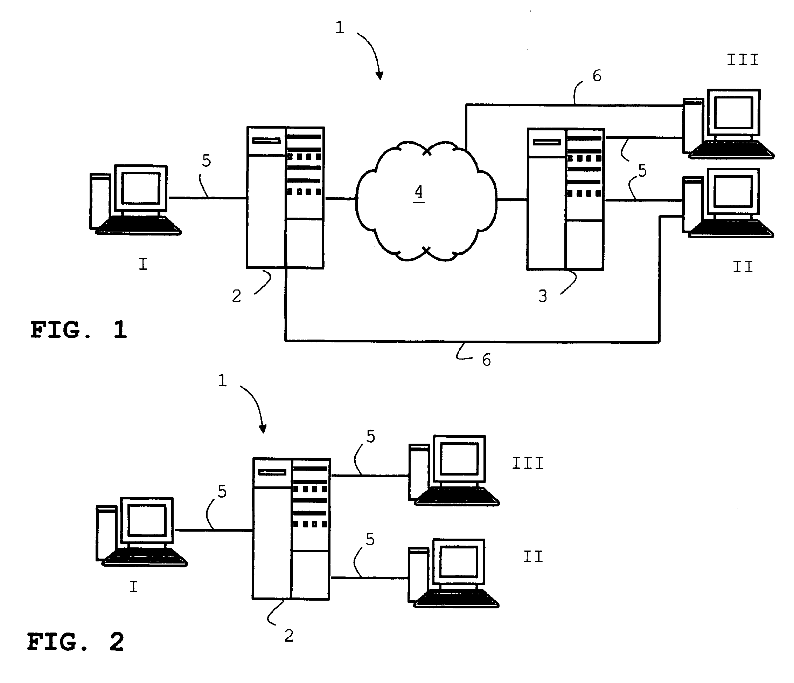

FIG. 1 shows a system 1 comprising a first server 2 and a second server 3 connected via a network 4. The first server 2 is connected to a first user station I. The second server 3 is connected to a second user station II and a third user station III.

The components of the system 1 are connected by network connections 5, 6 which are also present in the network 4. The network 4 and the network connections 5 may involve multiple networks, both wired and wireless. The connection of the user devices I, II and III is not necessarily direct to the servers 2 and 3.

The first, second and third user devices I, II and III are arranged for sending and receiving electronic messages, such as e-mail messages, and may be personal computers, mobile communication devices etc.

FIG. 2 shows an alternative system 1, wherein the servers 2 and 3 have been integrated to a single server 2. In this case, the processes described below may be internal processes.

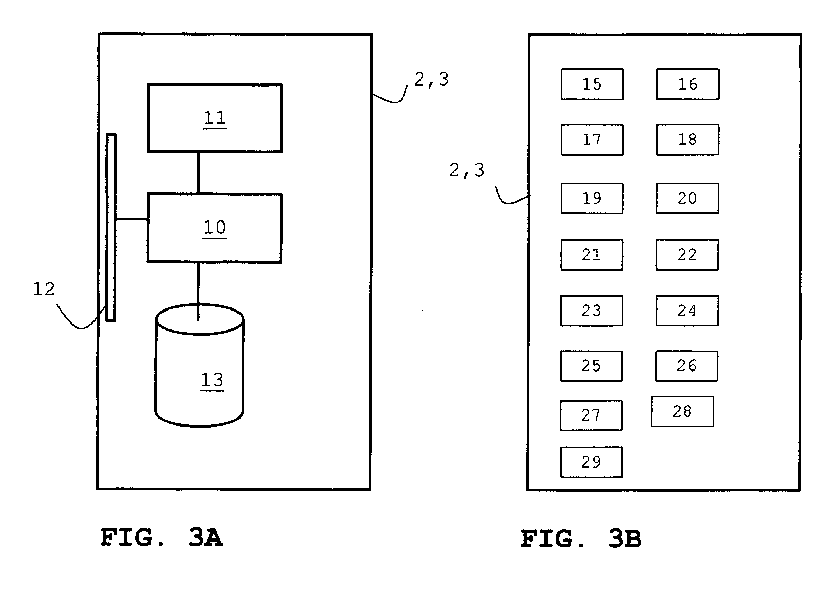

FIGS. 3A and 3B show a schematic example of a server 2 and/or server 3 of the system 1 according to FIGS. 1 and 2. Hereinafter it will be assumed that, although not necessary, both servers 2 and 3 are arranged as described below.

The server 2, 3 comprises a processor 10, a memory 11, a network adapter 12 for communicating with the first, second and third user devices I, II and III and a database 13. It should be appreciated that the server 2, 3 is normally capable of connecting to more than the three user devices I, II and III shown in FIG. 1.

The specific functions of the server 2, 3 are schematically illustrated in FIG. 3B and will now be described in further detail. It should be appreciated that the functions may be largely implemented as software code portions of one or more computer programs running on the processor 10.

The server 2, 3 is arranged to receive electronic messages from the first user device I.

The server 2, 3 comprises an electronic message receiver 15 arranged for receiving an electronic message or a portion thereof and an electronic message transmitter 16 arranged for transmitting an electronic message or a portion thereof to another server and/or the second user device II and/or third user device III.

The server 2, 3 further comprises an instruction signal receiver 17 arranged to receive an instruction signal from the second and third user devices II, III to present received electronic messages at these devices.

The server 2, 3 also comprises a query issuer 18 for issuing a query for portions of electronic messages addressed to the addressee from which the instructions signal has been received. The query from the query issuer is received by a query receiver 19 arranged to provide a portion of the electronic message on the basis of data from the database 13 as will be described in further detail below. It should be noted, however, that the portion(s) of the electronic message may also be pushed instead of being retrieved by via a query. In such a case, the query receiver 19 may be replaced by a portion pusher 19 and the query issuer 18 may be replaced by a portion push receiver 18. The query option is typically more attractive from the perspective of saving electronic resources.

The server 2, 3 may also contain a spam notification receiver 20 arranged for receiving a spam notification signal from the second/third user device II, III related to the electronic message or the portion thereof. Also, the server 2, 3 has an access restrictor 21 arranged for restricting access to the electronic message for the (user of) the third user device III in response to receiving said spam notification signal from the second user device II.

The server 2, 3 has a register 22 storing a unique login code comprising a user name and a user specific password required for accessing the system 1 for each user of the user devices I, II and III.

Communication over the network connections 5, 6 is secured. To that end, the server 2, 3 contains an encryptor 23 for encrypting part or all communications between the system 1 and the first, second and third user devices I, II, and III. It is noted that alternatively, or in addition thereto, the network connections 5, 6 may be secured. Secure communication prevents or reduces the possibility of sniffing identities of (the users of) the first, second and third user device I, II and III.

The server 2,3 has an electronic mail deleter 24 for deleting the electronic mail and the copies and/or portions thereof, if any, in response to the spam notification signal from the second/third user device II, III.

Furthermore, the server 2, 3 has a sender identification storage 25 arranged for storing a sender identification of a sender of the electronic message for which the spam notification signal receiver 15 received a spam notification signal, i.e. the identification of the user of the first user device I in the present case. If other (past of future) electronic messages have been received or are received from this user, the access restrictor 21 may use the sender identification to restrict access to these further electronic messages for the third user device III automatically, i.e. without requiring a further spam notification signal for these further electronic messages.

The access restrictor 21 may be arranged such that e.g. access is restricted for the (user of the) third user device III for a particular time period or to a part of the other electronic messages. However, the access restrictor 21 may also prevent downloading of the electronic message to said third user device III or prevent display of the electronic message on the third user device III. Of course, the access restrictions for the other electronic messages may also apply directly for the (user of the) second user device II.

In particular, a communication history between a sender and the recipient from which a spam notification signal was received may be taken into account. For example, if the users of the first user device I and the second user device II have not been engaged in electronic message exchange before (i.e. the users don't 'know' each other), the receiving of the spam notification signal may immediately result in preventing other addressees from downloading or displaying other past and future electronic messages. However, if the user of the first user device I and the second user device II have been involved in electronic message exchange in the past (i.e. the users 'know' each other), consequences of the spam notification signal may be less severe. Another example of users 'knowing' each other may be that each of the users have indicated prior to exchange of electronic message that they will accept electronic messages from each other.

The server 2, 3 may contain a counter 26 adapted for counting the number of spam notification signals received for electronic messages of a particular sender and/or for counting the number of times access has been restricted for electronic messages of said sender.

The server 2, 3 comprises a warning message transmitter 27 adapted for sending a warning message to a sender of the electronic message for which said spam notification signal was received from the second user device

### II.

The server 2, 3 also comprises an access restrictor 28 adapted to restrict access to the system 1 for a sender of the electronic message for which said spam notification signal was received, i.e. the sender using the first electronic device I. Restriction of the access may involve exempting the user of the first device I from further sending of electronic messages via the system 1. However, the server 2, 3 may comprise an assessor module 24 arranged to restrict access to the system in dependence on e.g. the number of spam notification signals received for electronic messages of the sender and/or the number of times access has been restricted for electronic messages of the sender.

In particular, a communication history between a sender and the recipient from which a spam notification signal was received may be taken into account. For example, if the users of the first user device I and the second user device II have not been engaged in electronic message exchange before (i.e. the users don't 'know' each other), the receiving of the spam notification signal may immediately result in preventing access to the server system 1 for the sender. However, if the user of the first user device I and the second user device II have been involved in electronic message exchange in the past (i.e. the users 'know' each other), consequences of the spam notification signal may be less severe for the user of the first user device I. Another example of users 'knowing' each other may be that each of the users have indicated prior to exchange of electronic message that they will accept electronic messages from each other.

It should be noted that the server 2, 3 may contain a spam filter (not shown) using a spam rule set, spam parameters and/or spam criteria for detecting, and possibly restricting access to, electronic spam messages. The server 2, 3, however, is capable of restricting access to the electronic message for the (user of the) second/third device II, III and/or to the system for the sender of the electronic spam message independent from the operation of the spam filter, i.e. solely on the basis of one or more spam notification signals.

Finally, the server system 1 contains an approval module 29 adapted to allow exchange of electronic messages between a sender, e.g. the user of the first user device I, and an addressee, e.g. the user of the second/third user device II, III, only if both the sender and the addressee have signaled approval for said exchange to the access module 29 in advance. The computer program running on the user devices I, II and III for sending and receiving electronic messages may e.g. comprise a mandatory address book under the control of the access module 29. Only by using this address book, a sender may address addressees of the electronic message. Entries in the address book can be made only in response to mutual approval of users to exchange electronic messages.

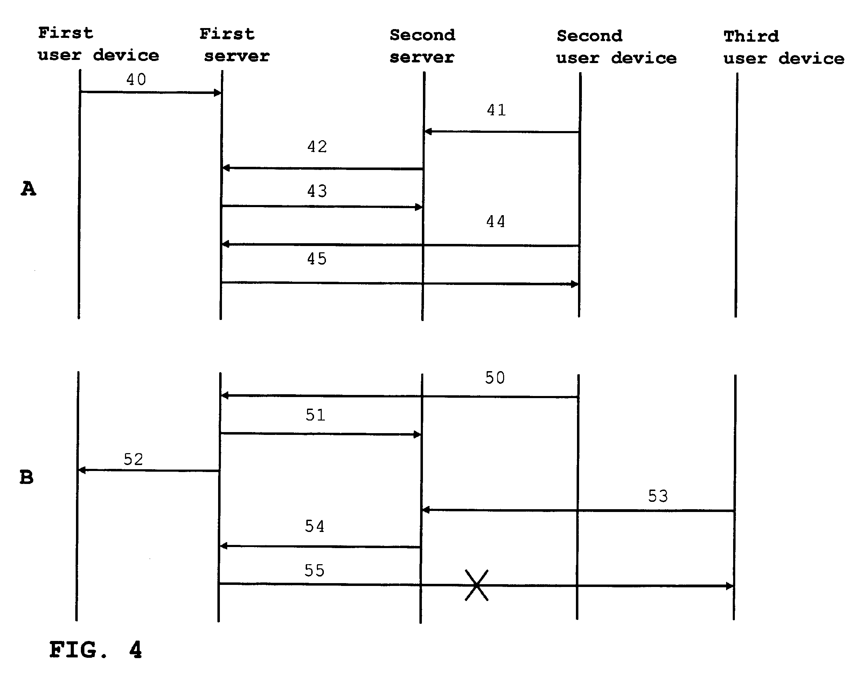

FIG. 4 is a timing diagram illustrating a method performed in the system 1 of FIG. 1 using servers 2, 3 as described with reference to FIGS. 3A and 3B. It should be noted that the method also applies for the system 1 depicted in FIG. 2. Part A of the timing diagram illustrates the steps for transmitting an electronic message from a first user device I to a second user device II. Part B of the timing diagram illustrates steps of a method when the user of the second device II identifies the received electronic message as a spam message.

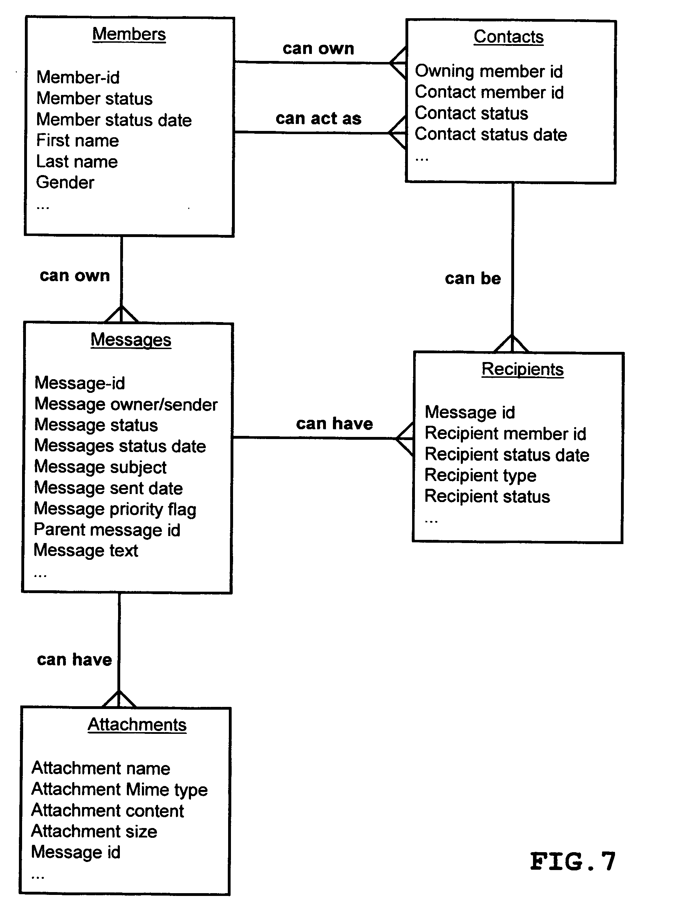

In step 40, the electronic message receiver 15 of server 2 receives an electronic message from the first user device I over the secure network connection 5. The electronic message is addressed to the users of user devices II and III. In advance of sending the electronic message, the user of the first user device may have logged in to the system 1 and has been authenticated using the register 22. The electronic message is stored in the server 2, more particularly in the database 13, in accordance with the data model shown in FIG. 7. Generally, this means that the received electronic message is analyzed and that different parts of the electronic message are identified and stored as separate fields in the database 13. Instead of a complete electronic message, the electronic message may arrive at the server 2 in separate fields.

In step 41, a user of the second user device II, possibly also having logged in to the system 1 using the register 22, opens his mailbox. In doing so, the second user device II transmits an instruction signal that is received by the instruction signal receiver 17 of the second server 3.

In response to receiving the instruction signal, a query issuer 18 of the second server 3 issues a query to the first server 2 for portions of electronic messages for which the user of the second user device II is the addressee. This step is illustrated as step 42 in FIG. 4.

The query is received by a query receiver 19 of the first server 2. At the first server 2, the query is performed in the database 13 to provide a portion of the electronic message received from the first user device I. The portion may comprise one or more fields stored in the database 13 relating to the received electronic message from the first user device. The portion includes a retrieval key, identifying the location where the complete electronic message can be retrieved from.

In step 43, the electronic message transmitter 16 of the first server 2 transmits the thus provided portion of the electronic message to the second server 3 that displays the portion to the (user of the) second user device II. In this way, the mailbox of the user of the second user device II is built up dynamically, i.e. substantially each time the user of the second user device II opens his mailbox, the system 1 is queried for portions of electronic messages (which may reside at different servers) addressed to this user and the retrieved portions form the mailbox.

As noted above, the query option may be replaced by a push option. In that situation, after receiving the electronic message, a portion of the electronic message is transmitted to server 2 automatically. Upon opening the mailbox by the user of the second user device II, the portion of the electronic message is already present at the second server 3.

If the user of the second user device II decides that the electronic message is of interest to him, he may select the portion of the electronic message. Upon selection of the portion, the second user device II initiates a selection message in step 44 that is received by a selection message receiver of the first server 2 using the retrieval key of the portion of the electronic message.

In step 45, the complete electronic message is retrieved from the database 13 by the second user device II.

If the first reader, e.g. the user of the second user device II, accepts the electronic message as a desired message, a spam notification signal will not be received by the spam notification receiver 20 of the system 1. Consequently, the user of the third user device III may also access the electronic message.

If the user of the second user device II qualifies the contents of the electronic message as spam, he may transmit a spam notification signal relating to the electronic spam message to the first server 2. The user of the second user device II may e.g. send a spam notification signal by activating a dedicated button on a user interface of the second user device II. The spam notification signal is detected by the spam notification signal receiver 20 of the first server 2 in step 50.

The system 1 may perform a variety of operations in response to receiving the spam notification signal from the second user device II.

The e-mail deleter 24 may delete the electronic message from the first server 2, i.e. delete one or more fields in the database 13 relating to the electronic spam message, and also delete the portion of the electronic message at the second server 3, indicated by step 51.

Alternatively or in addition to step 51, the access restrictor 28 may restrict access to the system 1 for (the user of) the first user device I for which the spam notification signal was received, as indicated in step 52. Restriction of the access may involve exempting the user of the first device I from further sending of electronic messages via the system 1. As such a measure may be harsh on the user of the first user device I, access to the system 1 may be restricted in dependence on e.g. the number of spam notification signals received for electronic messages of the sender and/or the number of times access has been restricted for electronic messages of the sender, using counter 26. In particular, if the sender and recipient have exchanged electronic messages before, access restriction to the system may be only performed after a certain number of spam notification signals from a recipient, using counter 26.

A warning signal may be transmitted to the user of the first user device I by the warning signal transmitter 27. The warning signal may point this user to the consequences of continuing providing electronic spam messages.

In response to receiving the spam notification signal, the access restrictor 21 of the first server 2 restricts access for (a user of) the third user device III to the electronic message. An example of how such an embodiment would operate is indicated by steps 53-55 in FIG. 4. In step 53, the user of the third user device III opens his mailbox and an instruction signal is received by the instruction signal receiver 17 of the second server. Again a query is issued to the first server 1, indicated by step 54. However, since access to the electronic message has been restricted in response to receiving the spam notification message from the second user device II, a portion of the electronic message may not be retrieved from the database 13. Therefore, indicated by the cross in step 55 of FIG. 4, the portion will not be used for building up the mailbox of the user of the third user device III. Therefore, the user of the third user device III will not be able to retrieve the electronic message. In fact, in the present embodiment, the user of the third user device III will not even be aware of the electronic spam message.

Another example of the operation of the system 1 in response to receiving a spam notification signal includes the following. The user of the first user device I distributing the electronic spam message is known to the system 1, e.g. by having stored in register 22 a unique login code comprising a user name and a user specific password required for accessing the system 1. Using these data, the sender identification storage 25 may have stored the identity of the sender of the electronic spam message. If an other electronic message is sent or has been sent (not necessarily an electronic spam message), it is determined that for this sender a spam notification signal has been received. Access to these other (previous or future) messages of the sender may therefore be denied automatically. Consequently, neither the second user device II nor the third user device III will have access to these other electronic messages. As such a measure may be rather harsh on the sender of the previous electronic spam message, consequences may be mitigated by allowing the access restrictor 21 to restrict access for the (user of the) second user device II and/or the third user device III for a particular time period and/or to only a part of the further electronic messages. In particular, if the sender and recipient have exchanged electronic messages before, access restriction to other electronic message may be only performed after a certain number of spam notification signals from a recipient, using counter 21.

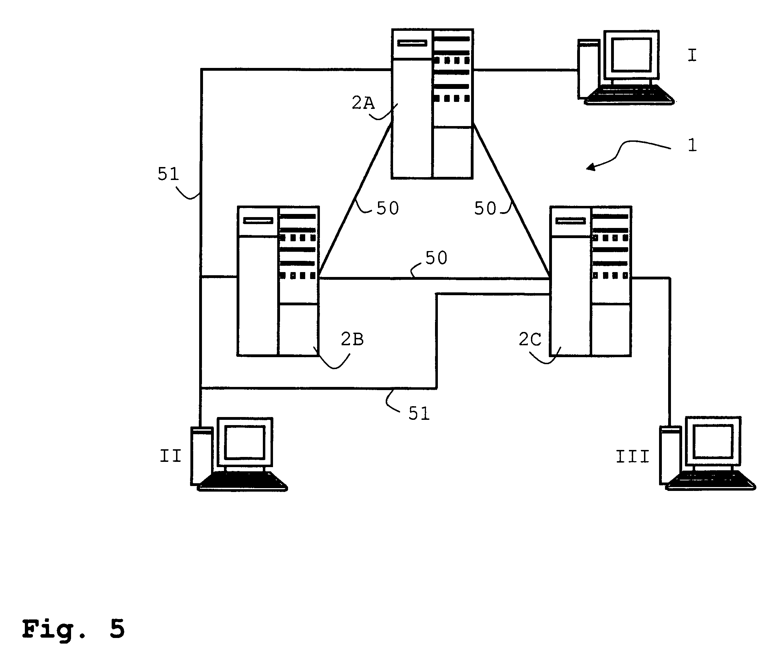

FIG. 5 shows a system 1 comprising several servers 2A, 2B and 2C in communicative connection with each other. The servers 2A, 2B and 2C together form the system 1. The connections 50 connecting the servers 1A, 1B and 1C constitute an inner ring. The first, second and third user devices I, II and III may connect to different servers 2A, 2B and 2C of this inner ring, as shown in FIG. 5, either directly or via further servers (not shown). Each of the first, second and third user devices I, II and III may also access the servers 2B and 2C; 2A and 2C and 2A and 2B, respectively without using the inner ring formed by the connections 50. In FIG. 5, this outer ring, formed by connections 51, is only drawn for the second user device II.

Communication may be secured in both the inner ring and the outer ring. This may be done by encrypting communication over the inner ring and outer ring and/or by making use of secure connections.

Each server 2A, 2B, 2C of the system 1 may contain the same functional modules 15-29 as described with reference to FIGS. 3A, 3B. However, the functional modules may also be distributed over the various servers 2A, 2B and 2C.

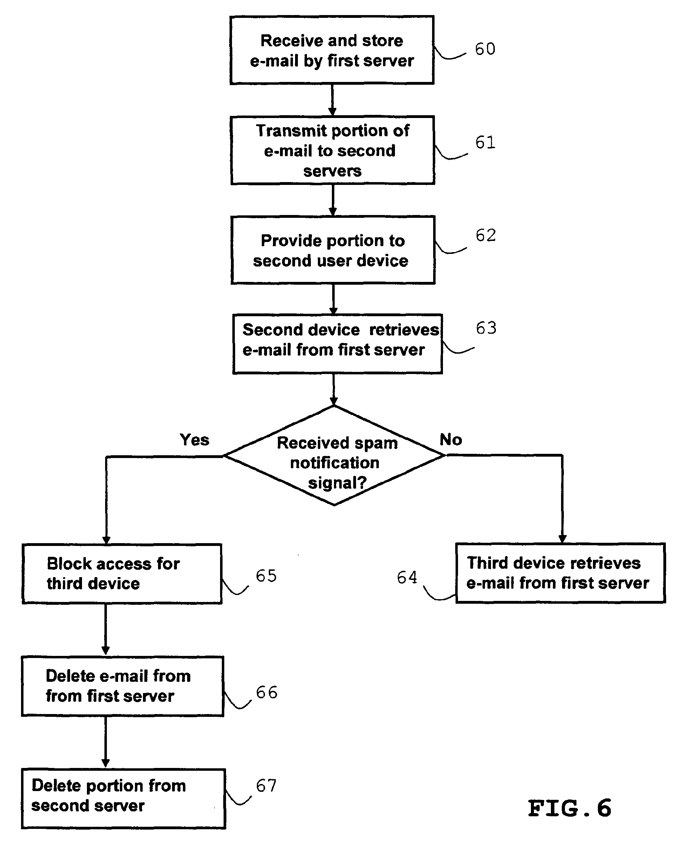

An embodiment of the operation of the system 1 in accordance with FIG. 5 will now be described with reference to FIG. 6.

The user of the first user device I sends an electronic spam message to the system 1 with the users of user devices II and III as addressees.

The electronic message receiver 15 of server 2A receives the electronic spam message and stores the message in the database 13 in step 60 as described above. Briefly, instead of storing the electronic message as done in a conventional e-mail server, individual parts of the electronic message are stored separately as fields in a database model (see FIG. 7).

If the user of the second user device II opens his mailbox, a query is issued to both the first server 1A and the third server III (possibly in combination with an internal query in the second server 2B) for portions of electronic messages for which this user is the addressee. The system 1 of servers 2A, 2B and 2C in combination with the inner ring of connections 50 may technically be regarded as a conceptually single database in this respect. For the electronic message of the user device I, in step 61, the electronic message transmitter 16 transmits an electronic message portion from the first server 2A to the second server 2B. A portion of the electronic message may e.g. comprise a sender-field, a subject-field and a retrieval key for retrieving the complete electronic message. The data size of the portion of the electronic message may be less than 200 bytes. The complete electronic message is stored only at server 1A. Of course, the push option for distributing the portion of the electronic message to servers 2B and 2C may also be used.

In step 62, the portion is presented to the user of the second user device II. The electronic message itself may be retrieved in step 63 by the second user device II from the first server 2A over the connections 51 forming the outer ring by selecting the portion of the electronic message provided from the second server 2B.

If the user of the second user device II does not qualify the electronic message as spam, the user of the third device III may access the electronic message as well. In that case, when the user of the third device III opens his mailbox, the third server 2C queries servers 2A and 2B over connections 50 for portions of electronic messages addressed to his account. The first server 2A provides the third server 2C with the portion and, upon selection of this portion, the complete electronic message may be downloaded to the third user device III (step 64). Alternatively, the portion may already be available at the third server 2C if the push option is used.

If the user of the second user device II qualifies the contents of the electronic message as spam, he may transmit a spam notification signal relating to the electronic spam message to the server 2A. The user of the second user device II may e.g. send a spam notification signal by activating a dedicated button on a user interface of the second user device II. The spam notification signal is detected by the spam notification signal receiver 20 of the first server 1A. In response to receiving the spam notification signal, the access restrictor 21 of the server 1A restricts access for (a user of) the third user device III to the electronic message, indicated by step 55. The e-mail deleter 24 of the server 1A may e.g. delete the electronic spam message, such that the user of the third device III has no access to the electronic spam message at the first server 1C (or will not even be displayed a portion thereof) and the portion at server 2B (steps66 and 67). The deletion of the (portions of) the electronic message is instructed over the inner ring of FIG. 4.

As mentioned above, the server 2A stores only a single copy of the electronic message independent of the number of addressees. The addressees are notified of the electronic message by means of portions characterizing the electronic message of small size. This saves a large amount of resources, e.g. transmission capacity. However, the system 1 may provide multiple copies of the electronic message if such an approach proves to be more effective. The number of copies of the electronic message is less than the number of addressees of said electronic message.

As for the embodiment of FIGS. 1 and 2, the user of the first user device I distributing the electronic spam message may be known to the server system 1, e.g. by having stored in register 22 of the system 1 a unique login code comprising a user address and a user specific password required for accessing the system 1. Using these data, the sender identification storage 20 has stored the identity of the sender of the electronic spam message. If a further electronic message is sent (not necessarily an electronic spam message), it is determined that for this sender a previous spam notification signal has already been received. Access to these further messages of the sender may therefore be denied for the users of both devices II and III. Consequently, neither the (user of the) second user device II nor the third user device III will have access to these further electronic messages. As such a measure may be rather harsh on the sender of the previous electronic spam message, consequences may be mitigated by allowing the access restrictor 21 at the first server 2A to restrict access for the (user of the) second user device II for a particular time period and/or to only a part of the further electronic messages.

It should be appreciated that the register 22 may be shared by multiple servers 1A, 1B and 1C, as well as the sender identification storage 20 for senders of previous electronic spam messages.

Also, as previously described for the embodiment of FIGS. 1 and 2, the system 1 may be triggered, using the spam notification signal, to block access for the user of the first user device I to the system 1 (including the milder variants) or the send a warning message.

It should be appreciated that, while in the above example a single spam notification signal was sufficient to exclude other addressees from receiving (other) electronic messages and to exclude a sender from participation in the system, another number of spam notification signals may be set before such consequences will apply.

It should also be appreciated that the communication history between a sender and a recipient may be a factor in restricting access to other electronic messages and/or to the system 1.

The servers 2A, 2B and 2C of the system 1 are preferably not conventional e-mail servers. Such e-mail servers store e-mail messages, duplicate the e-mail messages to the number of addressees and provide the e-mail messages upon request for a particular one of those messages. The functionality of these mail servers is rather limited.

The applicant proposes to use one or more databases, such as Oracle^{®} databases, for which the response can be programmed in dependence of e.g. the request made to the database. Incoming electronic messages are analyzed and predetermined parts are stored in fields of the database(s)

The use of databases for the servers 1A, 1B and 1C allows monitoring relations between different fields, as shown in FIG. 7.

The functionality as described above can be obtained using the database model of FIG. 7.

As an example, if a user issues a spam notification signal, the recipient status and recipient status date are updated. If a single spam notification signal is sufficient for restricting access to the electronic message for other recipients and to restrict access to the server system 1 for a sender, this status will propagate to the message status and the member status, respectively. By adding a messages status date and a member status data to the data model, flexibility is obtained.

Fields of the box "messages" may be part of the portion of the electronic message that is pushed or queried in the server system. Examples include the message owner/sender, the message subject and the message sent date. The message id relates to the retrieval key for retrieving the complete electronic message.

It should be noted that when a mandatory address book for addressing addressees of the electronic message is not used, the box "contacts" may be eliminated in the database model and a link can be established directly from the box "members" to the box "recipients".

The server system 1 may contain an approval module 25. As such, the servers system 1 may be so configured for all the participants that any and all information addressed to them as participants cannot reach them and that, prior to the first communication within the system between two participants A and B, the two participants A and B will first have to go through an arrangement/approval protocol.

## Claims

1. A system for transmitting an electronic message from a first user device to a second user device and a third user device, the system comprising at least a first server and a second server communicatively connectable to each other, wherein the first user device is connectable to the first server and the second user device and third user device are connectable to the second server:
the first server is arranged for:
- receiving and storing the electronic message from the first user device addressed to the second user device and third user device;
- receiving a query for a portion of the electronic message from the second server;
- transmitting a portion of the electronic message to the second server, and
- transmitting the electronic message to the second user device upon selection of said portion of said electronic message at said second user device, and wherein
the second server is arranged for:
- issuing a query for the portion of the electronic message in response to receiving an instruction signal from the second user device;
- receiving said portion of said electronic message from said first server in response to the query, and
- presenting said portion of said electronic message in a selectable manner to said second user device
wherein the first server is further arranged for:
- receiving a spam notification signal related to the stored electronic message from the second user device; and
- in response to receiving the spam notification signal, avoiding sending a portion of the complete electronic message to the second server in response to a query for the portion of the message from the second server in response to an instruction signal from the third user device.

2. The system according to claim 1, said electronic message being addressed to a number of addressees employing a plurality of user devices, wherein said system is arranged for duplicating said electronic message such that the resulting number of electronic messages stored in the first server is less than the number of addresses of said electronic message.

3. The system according to claim 1, said electronic message being addressed to a number of addressees employing a plurality of user devices, wherein said system is arranged such that only said first server stores said electronic message.

4. The system according to claim 1, wherein said first server is arranged to delete said electronic message.

5. The system according to one or more of the preceding claims, wherein said first server is arranged to transmit a deletion signal to said second server for deleting said portion of said electronic message for said second user device.

6. The system according to one or more of the preceding claims, wherein said system comprises a register with login information of users of the first, second and third user devices.

7. The system according to one or more of the preceding claims, wherein said system is a secure system.

8. The system according to one or more of the preceding claims, wherein said first server is arranged to:
- store identification data of the user of said first device in response to receiving the spam notification signal from said second device related to said electronic message;
- restrict access to at least one further electronic message of said user of the first user device using said user identification data.

9. The system according to one or more of the preceding claims, wherein said system is further arranged to send a warning message to said first user device in response to receiving a spam notification signal from said second user device.

10. The system according to one or more of the preceding claims, wherein said system is further arranged to restrict access to said system for a user of said first user device in response to receiving the spam notification signal from said second user device.

11. The system according to one or more of the preceding claims, wherein said first and second servers comprise programmable databases.

12. A method for transmitting an electronic message from a first user device to a second user device and a third user device, comprising the steps of:
- receiving and storing an electronic message from the first user device, addressed to the second user device and the third user device, by a first server;
- receiving an instruction signal from said second user device by a second server;
- issuing a query for a portion of the electronic message from the second server to the first server in response to receiving the instruction signal;
- transmitting a portion of said electronic message from the first server to the second server;
- presenting said portion of said electronic message in a selectable manner from the second server to the second user device;
- transmitting said electronic message from said first server to said second user device in response to selection of said portion of said electronic message at said second user device;
- receiving at the first server a spam notification signal related to the stored electronic message from the second user device;
- receiving an instruction signal from said third user device by the second server to issue a query for the portion of the electronic message when said spam notification signal has been received at said first server;
- in response to receiving the notification signal, avoiding sending the portion of the electronic message to the second server in response to the query following the instruction signal from the third user device.

13. The method according to claim 12, further comprising the step of duplicating said electronic message at said first server such that the resulting number of electronic messages is less than the number of addressees of said electronic message.

14. The method according to claim 12, further comprising the step of storing said electronic message only once at said first server.

15. The method according to one or more of the preceding claims 13 or 14 further comprising the step of deleting of said electronic message at said first server after receiving the spam notification signal.

16. The method according to claims 12-15, further comprising the step of transmitting a deletion signal to said second server for deleting said portion of said electronic message for said second user device.

17. The method according to one or more of the claims 12-16, further comprising the steps of:
- storing identification data of a user of the first user device in response to receiving the one or more spam notification signals from said second user device related to said electronic message;
- restricting access to at least one further electronic message of said user of the first user device, using said user identification data.

18. The method according to one or more of the claims 12-17, further comprising the step of sending a warning message to said first user device in response to receiving a spam notification signal from said second user device.

19. The method according to one or more of the claims 12-18 , further comprising the step of restricting access to said system for a user of said first user device in response to receiving a spam notification signal from said second device.

20. The method according to one or more of the claims 12.-19, further comprising the step of operating at least said first server as a programmable database.

21. A computer program comprising software code portions adapted for, when installed on and run by an electronic system, performing the method according to one or more of the claims 12-20.

22. A carrier containing the computer program of claim 21.

## Patentansprüche

1. System zum Übertragen einer elektronischen Nachricht von einem ersten Benutzerendgerät an ein zweites Benutzerendgerät und ein drittes Benutzerendgerät, wobei das System mindestens einen ersten Server und einen zweiten Server aufweist, die kommunikativ miteinander verbindbar sind, wobei das erste Benutzerendgerät mit dem ersten Server verbindbar ist und das zweite Benutzerendgerät und das dritte Benutzerendgerät mit dem zweiten Server verbindbar sind,
wobei der erste Server dafür konfiguriert ist:
- die an das zweite Benutzerendgerät und das dritte Benutzerendgerät adressierte elektronische Nachricht vom ersten Benutzerendgerät zu empfangen und zu speichern;
- eine Anfrage für einen Teil der elektronischen Nachricht vom zweiten Server zu empfangen;
- einen Teil der elektronischen Nachricht an den zweiten Server zu übertragen; und
- die elektronische Nachricht nach einer Auswahl des Teils der elektronischen Nachricht am zweiten Benutzerendgerät an das zweite Benutzerendgerät zu übertragen, und
wobei der zweite Server dafür konfiguriert ist:
- in Antwort auf den Empfang eines Befehlssignals vom zweiten Benutzerendgerät eine Anfrage für den Teil der elektronischen Nachricht auszugeben;
- den Teil der elektronischen Nachricht in Antwort auf die Anfrage vom ersten Server zu empfangen; und
- den Teil der elektronischen Nachricht auf eine auswählbare Weise dem zweiten Benutzerendgerät zu präsentieren,
wobei der erste Server ferner dafür konfiguriert ist:
- ein mit der gespeicherten elektronischen Nachricht in Beziehung stehendes Spam-Mitteilungssignal vom zweiten Benutzerendgerät zu empfangen; und
- in Antwort auf den Empfang des Spam-Mitteilungssignals die Übertragung eines Teils der vollständigen elektronischen Nachricht an den zweiten Server in Antwort auf eine Anfrage für den Teil der Nachricht vom zweiten Server zu unterdrücken, die nach dem Empfang eines Befehlssignals vom dritten Benutzerendgerät ausgegeben wird.

2. System nach Anspruch 1, wobei die elektronische Nachricht an mehrere Adressaten adressiert ist, die mehrere Benutzerendgeräte verwenden, wobei das System dafür konfiguriert ist, die elektronische Nachricht derart zu vervielfältigen, dass die erhaltene Anzahl elektronischer Nachrichten, die im ersten Server gespeichert sind, kleiner ist als die Anzahl der Adressaten der elektronischen Nachricht.

3. System nach Anspruch 1, wobei die elektronische Nachricht an mehrere Adressaten adressiert ist, die mehrere Benutzerendgeräte verwenden, wobei das System derart konfiguriert ist, dass nur der erste Server die elektronische Nachricht speichert.

4. System nach Anspruch 1, wobei der erste Server dafür konfiguriert ist, die elektronische Nachricht zu löschen.

5. System nach einem oder mehreren der vorangehenden Ansprüche, wobei der erste Server dafür konfiguriert ist, ein Löschsignal an den zweiten Server zu übertragen, um den Teil der elektronischen Nachricht für das zweite Benutzerendgerät zu löschen.

6. System nach einem oder mehreren der vorangehenden Ansprüche, wobei das System ein Register mit Anmeldeinformation für Benutzer des ersten, des zweiten und des dritten Benutzerendgeräts aufweist.

7. System nach einem oder mehreren der vorangehenden Ansprüche, wobei das System ein sicheres System ist.

8. System nach einem oder mehreren der vorangehenden Ansprüche, wobei der erste Server dafür konfiguriert ist:
- in Antwort auf den Empfang des mit der elektronischen Nachricht in Beziehung stehenden Spam-Mitteilungssignals vom zweiten Benutzerendgerät Identifizierungsdaten des Benutzers des ersten Benutzerendgeräts zu speichern, und
- einen Zugriff des Benutzers des ersten Benutzerendgeräts auf mindestens eine weitere elektronische Nachricht unter Verwendung der Benutzeridentifizierungsdaten einzuschränken.

9. System nach einem oder mehreren der vorangehenden Ansprüche, wobei das System ferner dafür konfiguriert ist, in Antwort auf den Empfang eines Spam-Mitteilungssignals vom zweiten Benutzerendgerät eine Warnmeldung an das erste Benutzerendgerät zu übertragen.

10. System nach einem oder mehreren der vorangehenden Ansprüche, wobei das System ferner dafür konfiguriert ist, in Antwort auf den Empfang des Spam-Mitteilungssignals vom zweiten Benutzerendgerät einen Zugriff auf das System für einen Benutzer des ersten Benutzerendgeräts einzuschränken.

11. System nach einem oder mehreren der vorangehenden Ansprüche, wobei der erste und der zweite Server programmierbare Datenbanken aufweisen.

12. Verfahren zum Übertragen einer elektronischen Nachricht von einem ersten Benutzerendgerät an ein zweites Benutzerendgerät und ein drittes Benutzerendgerät, mit den Schritten:
- Empfangen und Speichern einer elektronischen Nachricht vom ersten Benutzerendgerät, die an das zweite und das dritte Benutzerendgerät adressiert ist, durch einen ersten Server;
- Empfangen eines Befehlssignals vom zweiten Benutzerendgerät durch einen zweiten Server;
- Ausgeben einer Anfrage für einen Teil der elektronischen Nachricht vom zweiten Server an den ersten Server in Antwort auf den Empfang des Befehlssignals;
- Übertragen eines Teils der elektronischen Nachricht vom ersten Server an den zweiten Server;
- Präsentieren des Teils der elektronischen Nachricht auf eine auswählbare Weise durch den zweiten Server für das zweite Benutzerendgerät;
- Übertragen der elektronischen Nachricht vom ersten Server an das zweite Benutzerendgerät in Antwort auf die Auswahl des Teils der elektronischen Nachricht am zweiten Benutzerendgerät;
- Empfangen eines mit der gespeicherten elektronischen Nachricht in Beziehung stehenden Spam-Mitteilungssignals vom zweiten Benutzerendgerät;
- Empfangen eines Befehlssignals vom dritten Benutzerendgerät durch den zweiten Server, um eine Anfrage für den Teil der elektronischen Nachricht auszugeben, wenn das Spam-Mitteilungssignal am ersten Server empfangen worden ist; und
- in Antwort auf den Empfang des Spam-Mitteilungssignals: Unterdrücken der Übertragung des Teils der elektronischen Nachricht an den zweiten Server in Antwort auf die Anfrage, die nach dem Empfang des Befehlssignals vom dritten Benutzerendgerät ausgegeben wird.

13. Verfahren nach Anspruch 12, ferner mit dem Schritt zum Vervielfältigen der elektronischen Nachricht am ersten Server derart, dass die erhaltene Anzahl elektronischer Nachrichten kleiner ist als die Anzahl von Adressaten der elektronischen Nachricht.

14. Verfahren nach Anspruch 12, ferner mit dem Schritt zum nur einmaligen Speichern der elektronischen Nachricht am ersten Server.

15. Verfahren nach Anspruch 13 oder 14, ferner mit dem Schritt zum Löschen der elektronischen Nachricht am ersten Server nach dem Empfang des Spam-Mitteilungssignals.

16. Verfahren nach einem der Ansprüche 12 bis 15, ferner mit dem Schritt zum Übertragen eines Löschsignals an den zweiten Server zum Löschen des Teils der elektronischen Nachricht für das zweite Benutzerendgerät.

17. Verfahren nach einem oder mehreren der Ansprüche 12 bis 16, ferner mit den Schritten:
- Speichern von Identifizierungsdaten eines Benutzers des ersten Benutzerendgeräts in Antwort auf den Empfang des mit der elektronischen Nachricht in Beziehung stehenden Spam-Mitteilungssignals vom zweiten Benutzerendgerät; und
- Einschränken des Zugriffs auf mindestens eine weitere elektronische Nachricht für den Benutzer des ersten Benutzerendgeräts unter Verwendung der Benutzeridentifizierungsdaten.

18. Verfahren nach einem oder mehreren der Ansprüche 12 bis 17, ferner mit dem Schritt zum Übertragen einer Warnmeldung an das erste Benutzerendgerät in Antwort auf den Empfang eines Spam-Mitteilungssignals vom zweiten Benutzerendgerät.

19. Verfahren nach einem oder mehreren der Ansprüche 12 bis 18, ferner mit dem Schritt zum Einschränken des Zugriffs auf das System für einen Benutzer des ersten Benutzerendgeräts in Antwort auf den Empfang eines Spam-Mitteilungssignals vom zweiten Benutzerendgerät.

20. Verfahren nach einem oder mehreren der Ansprüche 12 bis 19, ferner mit dem Schritt zum Betreiben mindestens des ersten Servers als eine programmierbare Datenbank.

21. Computerprogramm mit Softwarecodeabschnitten, die dazu geeignet sind, das Verfahren nach einem oder mehreren der Ansprüche 12 bis 20 auszuführen, wenn sie auf einem elektronischen System installiert sind und durch ein elektronisches System ausgeführt werden.

22. Datenträger, der ein Computerprogramm nach Anspruch 21 enthält.

## Revendications

1. Système pour transmettre un message électronique d'un premier dispositif utilisateur à un deuxième dispositif utilisateur et à un troisième dispositif utilisateur, le système comprenant au moins un premier serveur et un deuxième serveur connectable de manière communicative entre eux, dans lequel le premier dispositif utilisateur est connectable au premier serveur et le deuxième dispositif utilisateur et le troisième dispositif utilisateur sont connectables au deuxième serveur :
le premier serveur est agencé pour :
- recevoir et stocker le message électronique en provenance du premier dispositif utilisateur adressé au deuxième dispositif utilisateur et au troisième dispositif utilisateur ;
- recevoir une requête pour une portion du message électronique en provenance du deuxième serveur ;
- transmettre une portion du message électronique au deuxième serveur, et
- transmettre le message électronique au deuxième dispositif utilisateur lors de la sélection de ladite portion dudit message électronique au niveau dudit deuxième dispositif utilisateur, et dans lequel le deuxième serveur est agencé pour :
- émettre une requête pour la portion du message électronique en réponse à la réception d'un signal d'instruction en provenance du deuxième dispositif utilisateur ;
- recevoir ladite portion dudit message électronique en provenance dudit premier serveur en réponse à la requête, et
- présenter ladite portion dudit message électronique d'une manière sélectionnable audit deuxième dispositif utilisateur
dans lequel le premier serveur est agencé en outre pour :
- recevoir un signal de notification de pourriel relatif au message électronique stocké en provenance du deuxième dispositif utilisateur ; et
- en réponse à la réception du signal de notification de pourriel, éviter l'envoi d'une portion du message électronique complet au deuxième serveur en réponse à une requête pour la portion du message en provenance du deuxième serveur en réponse à un signal d'instruction en provenance du troisième dispositif utilisateur.

2. Système selon la revendication 1, ledit message électronique étant adressé à un nombre de destinataires employant une pluralité de dispositifs utilisateur, dans lequel ledit système est agencé pour dupliquer ledit message électronique de manière que le nombre résultant de messages électroniques stockés dans le premier serveur est inférieur au nombre de destinataires dudit message électronique.

3. Système selon la revendication 1, ledit message électronique étant adressé à un nombre d'adresses employant une pluralité de dispositifs utilisateur, dans lequel ledit système est agencé de manière que seul ledit premier serveur stocke ledit message électronique.

4. Système selon la revendication 1, dans lequel ledit premier serveur est agencé pour effacer ledit message électronique.

5. Système selon une ou plusieurs des revendications précédentes, dans lequel ledit premier serveur est agencé pour transmettre un signal d'effacement audit deuxième serveur pour effacer ladite portion dudit message électronique pour ledit deuxième dispositif utilisateur.

6. Système selon une ou plusieurs des revendications précédentes, dans lequel ledit système comprend un registre avec des informations d'ouverture de session d'utilisateurs des premier, deuxième et troisième dispositifs utilisateurs.

7. Système selon une ou plusieurs des revendications précédentes, dans lequel ledit système est un système sécurisé.

8. Système selon une ou plusieurs des revendications précédentes, dans lequel ledit premier serveur est agencé pour :
- stocker des données d'identification de l'utilisateur dudit premier dispositif en réponse à la réception en provenance dudit deuxième dispositif du signal de notification de pourriel relatif audit message électronique ;
- restreindre l'accès à au moins un message électronique ultérieur dudit utilisateur du premier dispositif utilisateur utilisant lesdites données d'identification d'utilisateur.

9. Système selon une ou plusieurs des revendications précédentes, dans lequel ledit système est agencé en outre pour envoyer un message d'avertissement audit premier dispositif utilisateur en réponse à la réception d'un signal de notification de pourriel en provenance dudit deuxième dispositif utilisateur.

10. Système selon une ou plusieurs des revendications précédentes, dans lequel ledit système est agencé en outre pour restreindre l'accès audit système pour un utilisateur dudit premier dispositif utilisateur en réponse à la réception du signal de notification de pourriel en provenance dudit deuxième dispositif utilisateur.

11. Système selon une ou plusieurs des revendications précédentes, dans lequel lesdits premier et deuxième serveurs comprennent des bases de données programmables.

12. Procédé pour transmettre un message électronique d'un premier dispositif utilisateur à un deuxième dispositif utilisateur et à un troisième dispositif utilisateur, comprenant les étapes suivantes :
- la réception et le stockage d'un message électronique en provenance du premier dispositif utilisateur, adressé au deuxième dispositif utilisateur et au troisième dispositif utilisateur, par un premier serveur ;
- la réception d'un signal d'instruction en provenance dudit deuxième dispositif utilisateur par un deuxième serveur ;
- l'émission d'une requête pour une portion du message électronique du deuxième serveur au premier serveur en réponse à la réception du signal d'instruction ;
- la transmission d'une portion dudit message électronique du premier serveur au deuxième serveur ;
- la présentation de ladite portion dudit message électronique d'une manière sélectionnable du deuxième serveur au deuxième dispositif utilisateur ;
- la transmission dudit message électronique dudit premier serveur audit deuxième dispositif utilisateur en réponse à la sélection de ladite portion dudit message électronique au niveau dudit deuxième dispositif utilisateur ;
- la réception au niveau du premier serveur d'un signal de notification de pourriel relatif au message électronique stocké en provenance du deuxième dispositif utilisateur ;
- la réception d'un signal d'instruction provenant dudit troisième dispositif utilisateur par le deuxième serveur pour émettre une requête pour la portion du message électronique quand ledit signal de notification de pourriel a été reçu au niveau dudit premier serveur ;
- en réponse à la réception du signal de notification de pourriel, l'empêchement de l'envoi de la portion du message électronique au deuxième serveur en réponse à la requête suivant le signal d'instruction en provenance du troisième dispositif utilisateur.

13. Procédé selon la revendication 12, comprenant en outre l'étape de duplication dudit message électronique au niveau dudit premier serveur de manière que le nombre résultant de messages électroniques soit inférieur au nombre de destinataires dudit message électronique.

14. Procédé selon la revendication 12, comprenant en outre l'étape de stockage dudit message électronique seulement une fois au niveau dudit premier serveur.

15. Procédé selon une ou plusieurs des revendications précédentes 13 ou 14, comprenant en outre l'étape d'effacement dudit message électronique au niveau dudit premier serveur après réception du signal de notification de pourriel.

16. Procédé selon les revendications 12 à 15, comprenant en outre l'étape de transmission d'un signal d'effacement audit deuxième serveur pour effacer ladite portion dudit message électronique pour ledit deuxième dispositif utilisateur.

17. Procédé selon une ou plusieurs des revendications 12 à 16, comprenant en outre les étapes suivantes :
- le stockage des données d'identification d'un utilisateur du premier dispositif utilisateur en réponse à la réception en provenance dudit deuxième dispositif utilisateur des un ou plusieurs signaux de notification de pourriel relatifs audit message électronique ;
- la restriction de l'accès à au moins un message électronique ultérieur dudit utilisateur du premier dispositif utilisateur, utilisant lesdites données d'identification d'utilisateur.

18. Procédé selon une ou plusieurs des revendications 12 à 17, comprenant en outre l'étape d'envoi d'un message d'avertissement audit premier dispositif utilisateur en réponse à la réception d'un signal de notification de pourriel en provenance dudit deuxième dispositif utilisateur.

19. Procédé selon une ou plusieurs des revendications 12 à 18, comprenant en outre l'étape de restriction de l'accès audit système pour un utilisateur dudit premier dispositif utilisateur en réponse à la réception d'un signal de notification de pourriel en provenance dudit deuxième dispositif.

20. Procédé selon une ou plusieurs des revendications 12 à 19, comprenant en outre l'étape d'exploitation d'au moins ledit premier serveur comme une base de données programmable.

21. Programme d'ordinateur comprenant des portions de code de logiciel pour, quand il est installé sur et exécuté par un système électronique, exécuter le procédé selon une ou plusieurs des revendications 12 à 20.

22. Support contenant le programme d'ordinateur selon la revendication 21.
